(19) **Europäisches Patentamt / European Patent Office / Office européen des brevets**

(11) **EP 4 308 916 B1**

(12) **FASCICULE DE BREVET EUROPÉEN**

(45) Date de publication et mention de la délivrance du brevet:
**18.02.2026   Bulletin 2026/08**

(21) Numéro de dépôt: **22710687.9**

(22) Date de dépôt: **23.02.2022**

(51) Classification Internationale des Brevets (IPC):
**G01N 29/04** (2006.01)     **B23K 26/00** (2014.01)
**B23K 26/073** (2006.01)    **G01L 1/25** (2006.01)
**G01N 1/44** (2006.01)      **G01N 19/04** (2006.01)
**G01N 29/24** (2006.01)

(52) Classification Coopérative des Brevets (CPC):
**G01N 29/043; G01N 29/2418;** G01N 19/04;
G01N 2203/0057; G01N 2291/0231

(86) Numéro de dépôt international:
**PCT/FR2022/050330**

(87) Numéro de publication internationale:
**WO 2022/195190 (22.09.2022 Gazette 2022/38)**

(54) **PROCÉDÉ DE CHOC LASER**

LASERSCHOCKVERFAHREN

LASER SHOCK METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **15.03.2021   FR 2102538**

(43) Date de publication de la demande:
**24.01.2024   Bulletin 2024/04**

(73) Titulaires:
- **Safran**
  **75015 Paris (FR)**
- **Centre National de la Recherche Scientifique**
  **75794 Paris Cedex 16 (FR)**
- **Sorbonne Université**
  **75006 Paris (FR)**
- **Ecole Nationale Supérieure d'Arts et Métiers (ENSAM)**
  **75013 Paris (FR)**
- **Conservatoire National des Arts et Métiers**
  **75141 Paris Cedex 03 (FR)**

(72) Inventeurs:
- **DUCOUSSO, Mathieu Loïc**
  **77550 Moissy-Cramayel (FR)**
- **CUENCA, Edouardo**
  **77550 Moissy-Cramayel (FR)**
- **COULOUVRAT, François**
  **75016 Paris (FR)**
- **BERTHE, Laurent**
  **75016 Paris (FR)**

(74) Mandataire: **Ernest Gutmann - Yves Plasseraud S.A.S.**
**C/o Plasseraud IP**
**104 Rue de Richelieu**
**CS 92104**
**75080 Paris Cedex 02 (FR)**

(56) Documents cités:
**US-A1- 2016 109 343     US-A1- 2016 131 557**
**US-B1- 7 509 876**

- **ECAULT ROMAIN ET AL: "Laser shock adhesion test numerical optimization for composite bonding assessment", COMPOSITE STRUCTURES, ELSEVIER SCIENCE LTD, GB, vol. 247, 4 May 2020 (2020-05-04), pages 1 - 12, XP086198376, ISSN: 0263-8223, [retrieved on 20200504], DOI: 10.1016/J.COMPSTRUCT.2020.112441**

- L. BERTHE ET AL: "State-of-the-art laser adhesion test (LASAT)", NONDESTRUCTIVE TESTING AND EVALUATION, vol. 26, no. 3-4, 1 September 2011 (2011-09-01), US, pages 303 - 317, XP055464854, ISSN: 1058-9759, DOI: 10.1080/10589759.2011.573550
- BOLIS C ET AL: "Physical approach to adhesion testing using laser-driven shock waves", JOURNAL OF PHYSICS D: APPLIED PHYSICS, INSTITUTE OF PHYSICS PUBLISHING, BRISTOL, GB, vol. 40, no. 10, 21 May 2007 (2007-05-21), pages 3155 - 3163, XP020111528, ISSN: 0022-3727, DOI: 10.1088/0022-3727/40/10/019

## Description

### Domaine technique de l'invention

Le présent document concerne un procédé pour configurer un faisceau laser pour contrôler les collages structuraux par procédé dit de de choc laser.

### Etat de la technique antérieure

On connait les procédés de choc laser pour l'évaluation non destructive des collages structurels de deux couches de matériaux différents. Un collage structurel est un collage supportant la reprise d'effort mécanique.

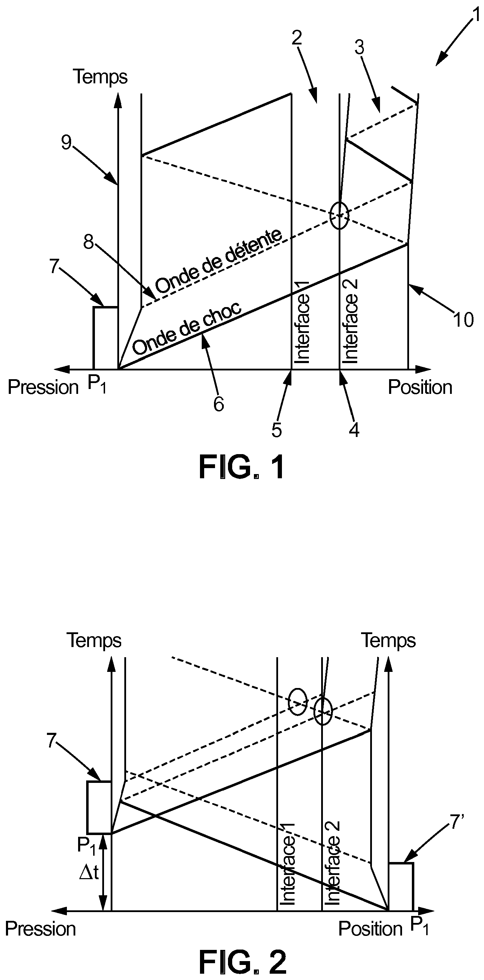

Ces procédés de choc laser comprennent l'illumination d'une structure assemblée par collage avec un laser intense et bref. Une telle structure est représentée à la figure 1. La structure 1 comprend deux couches 2, 3 collées entre elles par un joint de colle au niveau d'une interface collée 4. Le laser illumine une surface avant 5 de la structure 1. La forte intensité optique du laser crée une interaction laser/matière qui engendre un plasma dense qui se détend depuis la surface avant 5 de la structure illuminée. Ceci provoque la propagation d'une onde longitudinale 7 dans la structure 1 éclairée. La figure 1 représente la propagation de l'onde longitudinale 7 dans la structure en fonction du temps qui est sur l'axe des ordonnées 9.

La tête 6 de l'onde longitudinale 7 est d'abord en compression et la queue 8 de l'onde longitudinale 7 est en détente. L'écart temporel entre la tête 7 et la queue 8 de l'onde longitudinale 7 est proportionnel à la durée de l'impulsion laser.

Cette onde longitudinale 7 va ensuite traverser l'interface collée 4, se réfléchir sur une surface arrière 10 de la structure et subir un changement de phase : de compression/détente à détente/compression. L'onde longitudinale 7 va ensuite revenir vers l'interface collée 4 en tirant sur la matière. Lorsqu'elle va tirer sur le joint de colle, celui-ci va soit résister à cette traction soit céder sous celle-ci. Il est ainsi possible de certifier de la tenue mécanique d'un joint de colle vis-à-vis de la traction exercée dans le collage par le procédé de choc laser. Ces procédés restent limités car ils ne sont efficaces que si l'onde longitudinale 7 est suffisamment intense vis-à-vis de la tenue du collage. Les pertes principales d'intensité de l'onde longitudinale 7 étant en règle générale géométriques telles que les distances parcourues et le nombre d'interfaces traversées. En effet, l'atténuation ultrasonore de l'onde de choc résultant d'un parcours acoustique trop long ou des interfaces présentant un rapport d'impédance trop élevé peuvent être des facteurs limitant de ces procédés.

On connait aussi des procédés de choc laser optimisés qui utilisent une double impulsion laser de part et d'autre de la structure 1 à inspecter ce qui permet de générer deux ondes longitudinales 7, 7' contra-propagatrices telle que représentée sur la figure 2. Ces deux ondes longitudinales 7, 7' peuvent se croiser à un endroit désiré dans l'épaisseur de la structure 1 en fonction du délai $\Delta T$ entre les deux lasers.

On connait d'autres procédés de choc laser optimisés qui utilisent une double impulsion laser d'un même côté de la structure assemblée, ce qui permet de générer deux ondes longitudinales 7, 7' qui se suivent et peuvent interagir en un lieu donné, en fonction du délai $\Delta T$ entre les deux lasers, de la structure 1 de manière à générer un pic local de traction dans l'épaisseur de la structure 1.

Les documents ECAULT ROMAIN et al.: "Laser shock adhesion test numerical optimization for composite bonding assessment", COMPOSITE STRUCTURES, ELSEVIER SCIENCE LTD, GB, vol. 247, 4 mai 2020, XP086198376, ISSN: 0263-8223, L. BERTHE et al.: "State-of-the-art laser adhesion test (LASAT)", Nondestructive testing and evaluation, vol. 26, no. 3-4, 1 septembre 2011, pages 303-317, XP55464854, US, ISSN: 1058-9759, US 2016/109343 A1, US 201 6/1 31 557 A1, US 7 509 876 B1 et BOLIS C. et al.: "Physical approach to adhesion testing using laser-driven shock waves", JOURNAL OF PHYSICS D: APPLIED PHYSICS, INSTITUTE OF PHYSICS PUBLISHING, BRISTOL, GB, vol. 40, no. 10, 21 mai 2007, pages 3155-3163, XP020111528, ISSN: 0022-3727 décrivent des proceeds de chocs laser.

Néanmoins, ces procédés restent limités et ne sont utilisables que sur des structures avec des couches fines et risquent aussi d'endommager la structure. De plus, ces procédés sont complexes et coûteux à mettre en œuvre.

Il existe un besoin de procédé de choc laser par exemple pour un contrôle de collage de structures épaisses du point de vue acoustique et qui permet de garantir une bonne tenue de l'assemblage des couches.

### Résumé de l'invention

A cet effet, le présent exposé propose un procédé de focalisation d'ondes acoustiques au niveau d'une interface entre deux couches d'une structure multicouche, le procédé comprenant :

- fournir des moyens laser aptes à émettre un faisceau laser en direction d'une surface extérieure de la structure multicouche pour produire une onde longitudinale depuis le centre d'une tâche du faisceau laser projetée sur la surface extérieure et une onde transversale depuis la périphérie de ladite tâche,

- déterminer la distance entre ladite interface et la surface extérieure,
- déterminer une ou plusieurs vitesses de propagation de l'onde longitudinale et une ou plusieurs vitesses de propagation de l'onde transversale de la ou des couche(s) traversée(s) par lesdites ondes pour atteindre ladite interface,
- déterminer un rayon de la tâche du faisceau laser en fonction de la ou des vitesses de propagation et de ladite distance de sorte que le temps de parcours de l'onde longitudinale pour atteindre ladite interface est égal à trois fois le temps de parcours de l'onde transversale pour atteindre ladite interface.

Le procédé associe les tractions engendrées par l'onde longitudinale, issue du milieu de la tâche, et l'onde transversale issue des bords de la tâche pour générer un pic de traction lorsque ces deux ondes se superposent à la distance souhaitée dans l'épaisseur de la structure multicouche. Les inventeurs ont constaté que la détermination du rayon de la tâche permet d'optimiser l'intensité de la traction mécanique engendrée à la distance souhaitée à partir d'un seul laser contrairement à l'état de la technique, ce qui réduit la complexité et le coût de la configuration du laser notamment dans des applications de choc laser. En outre, le procédé permet de contrôler un assemblage présentant une géométrie de type couche d'épaisseur finie sur couche infinie (d'un point de vue ultrasonore) ou présentant un fort coefficient d'amortissement acoustique. Par exemple, ce procédé est particulièrement adapté au contrôle d'assemblages de type métaux sur composites, et où le composite est très épais, très atténuant ou de qualité structurale faible par rapport à la traction engendrée par le faisceau laser.

La distance peut correspondre à l'épaisseur d'une première couche de la structure multicouche portant la première surface extérieure.

Le rayon de la tâche du faisceau laser peut être déterminé par la formule suivante :

[math 1]

$$r = e\sqrt{\frac{9V_T^2 - V_L^2}{V_L^2}}$$

Avec r étant le rayon de la tâche du faisceau laser, e étant l'épaisseur de la première couche, $V_L$ étant la vitesse de propagation de l'onde longitudinale de la première couche et $V_T$ étant la vitesse de propagation de l'onde transversale de la première couche.

Cette formule peut être utilisée dans le cas d'une structure bicouche.

Dans le cas d'une structure multicouche, une autre interface peut être sélectionnée en se basant sur les mêmes principes acoustiques et en, réglant le rayon de la tâche laser de telle sorte que les ondes longitudinale et transversale convergent au niveau de l'interface d'intérêt.

Le rayon de la tâche du faisceau laser et/ou l'intensité du faisceau laser et/ou l'écart temporel entre une partie détente et une partie compression de l'onde longitudinale, respectivement de l'onde transversale, peuvent être déterminés par simulation numérique. Le faisceau laser peut présenter une intensité ayant un profil substantiellement carré (« top-hat » en anglais).

La première couche peut être une couche comprenant un métal par exemple du titane, la structure multicouche comprenant en outre une seconde couche adjacente à la première couche comprenant un composite.

La seconde couche peut présenter une épaisseur supérieure à l'épaisseur de la première couche.

La seconde couche peut présenter à l'échelle de l'onde acoustique une épaisseur considérée comme semi-infinie.

La première couche et la seconde couche peuvent être collées, par exemple par un joint de colle.

Le procédé de focalisation d'ondes acoustiques peut être utilisé pour configurer des moyens laser dans un procédé de vérification de la qualité de collage entre deux couches dans une structure multicouche. Par exemple, le procédé de focalisation d'ondes acoustiques peut être ainsi utilisé pour focaliser le faisceau laser au niveau d'une interface collée dans une structure multicouche avec une intensité donnée. Si l'interface collée résiste à la traction engendrée par l'onde longitudinale et l'onde transversale, le joint de colle à cette interface est considéré comme résistant.

La structure multicouche peut être une partie d'un bord d'attaque d'une aube de soufflante dans une turbomachine.

L'épaisseur de la première couche peut être inférieure à 5 mm, en particulier inférieure à 1 mm. L'épaisseur de la seconde couche peut être supérieure à 10 mm.

Le faisceau laser peut présenter une durée d'impulsion allant de quelques ps à une dizaine de ns, et un éclairement crête pouvant aller jusqu'à une dizaine de GW/cm$^2$ au niveau de la surface extérieure. La durée de l'impulsion laser peut être fonction des épaisseurs de structures à inspecter. Classiquement, la durée de l'impulsion laser est de l'ordre des sub-nanosecondes pour inspecter des structures submillimétriques et de l'ordre des nanosecondes pour des structures plus épaisses.

Le procédé de focalisation d'ondes acoustiques peut être utilisé pour décoller deux couches différentes dans une structure multicouche. Le procédé de focalisation d'ondes acoustiques peut être ainsi utilisé pour le désassemblage sélectif d'une structure multicouche en superposant la traction engendrée par l'onde longitudinale et l'onde transversale au niveau de l'interface dans la structure que l'on souhaite désassembler.

Le présent document concerne en outre un dispositif de focalisation d'ondes acoustiques comportant des moyens configurés pour la mise en oeuvre du procédé tel que précité. Par exemple, ledit dispositif peut comprendre au moins un laser et des moyens de configuration du laser aptes à déterminer le rayon du de la tâche du faisceau laser.

Le présent document concerne en outre un programme informatique comportant des instructions pour la mise en oeuvre d'au moins une partie du procédé tel que précité, lorsque lesdites instructions sont exécutées par un processeur d'un circuit de traitement.

## Brève description des figures

[Fig. 1] la figure 1, déjà décrite, représente un schéma d'exposition d'une structure multicouche à un faisceau laser selon l'art antérieur.

[Fig. 2] la figure 2, déjà décrite, représente un schéma d'exposition d'une structure multicouche à deux faisceaux laser sur deux faces opposées de la structure selon l'art antérieur.

[Fig. 3] la figure 3, déjà décrite, représente un schéma d'exposition d'une structure multicouche à deux faisceaux laser sur une même face de la structure selon l'art antérieur.

[Fig. 4] la figure 4 représente un schéma d'exposition d'une structure multicouche selon un exemple du procédé du présent document.

[Fig. 5] la figure 5 représente un schéma bloc d'un exemple du procédé du présent document.

[Fig. 6] la figure 6 représente un bloc-diagramme schématique d'un circuit de traitement pour la mise en oeuvre d'un exemple du procédé selon le présent exposé.

## Description détaillée de l'invention

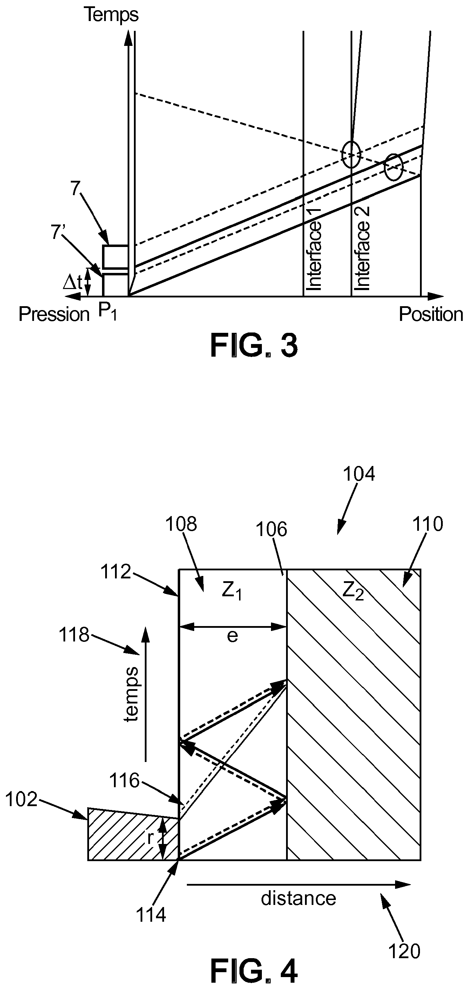

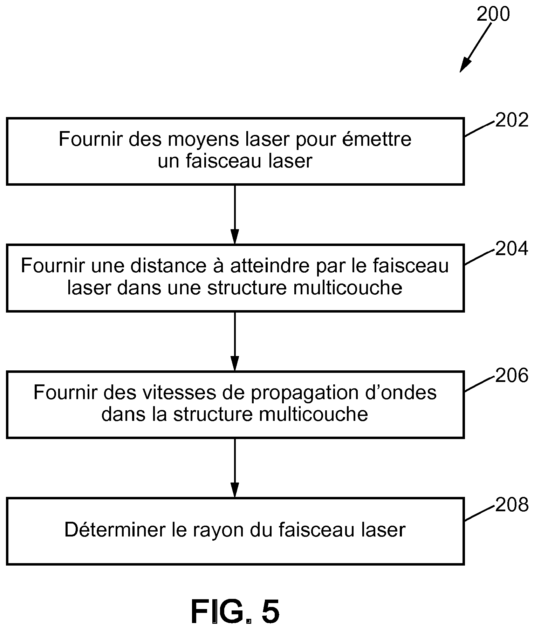

En référence aux figures 4 et 5, le procédé 200 permet de focaliser des ondes acoustiques d'un faisceau laser 102 au niveau d'une épaisseur e donnée dans une structure multicouche 104 afin de produire un effort de traction au niveau de ladite épaisseur e.

Le procédé 200 comprend une étape 202 de fourniture de moyens laser pour émettre le faisceau 102

Le procédé comprend une étape 204 de fourniture de l'épaisseur e souhaitée. Cette épaisseur e correspond à une interface 106 entre une première couche 108 et une seconde couche 110 de la structure multicouche 104. La première couche 108 et la seconde couche 110 sont collées entre elles au niveau de l'interface 106 par un joint de colle.

L'épaisseur de la seconde couche 110 est supérieure à l'épaisseur de la première couche 108, notamment l'épaisseur de la seconde couche 110 peut être considérée comme étant semi-infinie d'un point de vue acoustique.

La première couche 108 est réalisée dans un premier matériau présentant une première impédance Z1 et la seconde couche 110 est réalisée dans un second matériau différent du premier matériau et ayant une seconde impédance Z2.

En particulier, la première couche 108 est une couche en métal par exemple en titane et la seconde couche 110 est une couche en matériau composite.

Le faisceau laser 102 présente une intensité ayant un profil substantiellement carré. Lorsque le faisceau laser 102 est projeté sur une surface extérieure 112 de la structure multicouche 104, une onde longitudinale 114 issue d'une partie centrale d'une tâche de projection du faisceau laser 102 sur la surface extérieure 112 et une onde transversale 116 issue d'une partie périphérique de la tâche se propagent dans la structure 104 suivant la direction 120. La partie périphérique entoure la partie centrale.

L'onde longitudinale 114 présente une tête en compression représentée en trait continu, et suivie dans le temps selon l'axe 118 par une queue en détente représentée en trait discontinu. L'onde longitudinale 114 subit un changement de phase de détente à compression et vice versa à chaque interface rencontrée entre différents matériaux soit l'interface 106 et la surface extérieure 112. L'onde transversale 116 présente également une tête en compression représentée en trait continu, et suivie dans le temps selon l'axe 118 par une queue en détente représentée en trait discontinu.

L'onde transversale 116 se propage dans la structure multicouche 104 à une vitesse de propagation $V_T$ dans la première couche 108 inférieure à la vitesse de propagation $V_L$ de l'onde longitudinale 114 dans la première couche 108.

Le procédé 200 comprend aussi une étape 206 de fourniture de la vitesse de propagation $V_T$ de l'onde transversale 116 et de la vitesse de propagation $V_L$ de l'onde longitudinale 114.

Pour créer un pic de traction au niveau de l'interface 106, le faisceau laser 102 est configuré de sorte que l'onde longitudinale 114 se superpose à l'onde transversale 116 au niveau de l'interface 106.

Pour cela, le procédé 200 comprend une étape 208 de détermination du rayon r du faisceau laser 102 en fonction de l'épaisseur e et des vitesses de propagation $V_T$ et $V_L$. Le rayon r du faisceau laser 102 est déterminé de sorte que le temps de parcours de l'onde longitudinale 114 pour atteindre l'interface 106 est égal à trois fois le temps de parcours de l'onde transversale 116 pour atteindre l'interface 106.

Le rayon est déterminé par la formule suivante :

[math 2]

$$r = e\sqrt{\frac{9V_T^2 - V_L^2}{V_L^2}}$$

Le rayon r ainsi déterminé permet d'améliorer l'effort de traction au niveau de l'interface 106 de façon simple et peu coûteuse.

Le procédé 200 peut être utilisé dans un procédé de vérification de la qualité de collage entre les deux couches 108 et 110. Par exemple, le procédé 200 peut être ainsi utilisé pour focaliser le faisceau laser 102 au niveau de l'interface collée 106 pour engendrer un effort de traction donnée. Si l'interface collée 106 résiste à la traction engendrée par l'onde longitudinale 114 et l'onde transversale 116, le joint de colle à cette interface 106 est considéré comme résistant.

Le procédé 200 peut être utilisé pour décoller les deux couches 108 et 110 en appliquant un effort de traction approprié.

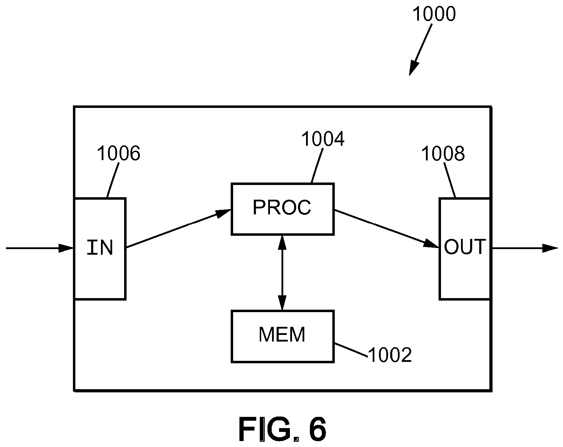

La figure 6 illustre, selon un mode particulier de réalisation de l'invention, un dispositif 1000 pour mettre en œuvre le procédé de focalisation d'ondes acoustiques.

Le dispositif 1000 comprend un espace 1002 de stockage, par exemple une mémoire MEM, et une unité 1004 de traitement équipée par exemple d'un processeur PROC. L'espace 1002 de stockage est par exemple une mémoire non volatile (ROM ou Flash, par exemple), et peut constituer un support d'enregistrement, ce support d'enregistrement pouvant en outre comprendre un programme d'ordinateur.

Le dispositif 1000 comprend en outre un module de communication permettant audit dispositif de se connecter à un réseau pour échanger des données avec d'autres dispositifs. Par exemple, le module de communication peut être une interface réseau Wifi ou Ethernet, ou encore un module de communication Bluetooth.

Le module de communication du dispositif 1000 comprend un module 1006 de réception de données, par exemple un récepteur IN, et un module 1008 d'émission de données, par exemple un émetteur OUT.

Le module 1006 est configuré pour recevoir la distance entre l'interface où le faisceau laser sera focalisé et la surface extérieure de la structure, des vitesses de propagation des ondes longitudinale et transversale dans la structure. Le module 1008 est configuré pour retourner un rayon du faisceau laser.

L'espace 1002 de stockage, qui peut être sécurisé, est configuré pour enregistrer et stocker toute donnée lue par le module 1006, traitée par l'unité 1004 et/ou envoyée par le module 1008.

L'unité 1004 de traitement, qui peut être pilotée par un programme, est configurée pour mettre en oeuvre le procédé 200 de focalisation d'ondes acoustiques tel que décrit en relation avec la figure 5.

À l'initialisation, les instructions d'un programme pilotant l'unité 1004 de traitement, sont par exemple chargées dans une mémoire vive (RAM, par exemple) non représentée que comprend comprise dans le dispositif 1000, avant d'être exécutées par le processeur de l'unité 1004 de traitement.

**Revendications**

**1.** Procédé (200) de focalisation d'ondes acoustiques au niveau d'une interface (106) entre deux couches (108,110) d'une structure multicouche (104), le procédé comprenant :

- fournir (202) des moyens laser aptes à émettre un faisceau laser (102) en direction d'une surface extérieure (112) de la structure multicouche pour produire une onde longitudinale (114) depuis le centre d'une tâche du faisceau laser projetée sur la surface extérieure (112) et une onde transversale (116) depuis la périphérie de ladite tâche,
- déterminer (204) la distance entre ladite interface (106) et la surface extérieure (112),
- déterminer (206) une ou plusieurs vitesses de propagation ($V_L$) de l'onde longitudinale et une ou plusieurs vitesses de propagation ($V_T$) de l'onde transversale de la ou des couche(s) traversée(s) par lesdites ondes pour atteindre ladite interface, **caractérisé en ce qu'**il comprend une étape consistant à :

- déterminer (208) un rayon (r) de la tâche du faisceau laser en fonction de la ou des vitesses de propagation et de ladite distance de sorte que le temps de parcours de l'onde longitudinale pour atteindre ladite interface et se superposer à l'onde transversale est égal à trois fois le temps de parcours de l'onde transversale pour atteindre ladite interface et se superposer à l'onde longitudinale.

2. Procédé (200) selon la revendication 1, dans lequel la distance correspond à l'épaisseur (e) d'une première couche (108) de la structure multicouche portant la première surface extérieure (112).

3. Procédé (200) selon la revendication 2, dans lequel le rayon de la tâche du faisceau laser est déterminé par la formule suivante :

$$r = e \sqrt{\frac{9V_T^2 - V_L^2}{V_L^2}}$$

Avec r étant le rayon de la tâche du faisceau laser, e étant l'épaisseur de la première couche, $V_L$ étant la vitesse de propagation de l'onde longitudinale de la première couche et $V_T$ étant la vitesse de propagation de l'onde transversale de la première couche.

4. Procédé (200) selon l'une des revendications 1 à 3, dans lequel le faisceau laser (102) présente une intensité ayant un profil substantiellement carré.

5. Procédé (200) selon l'une des revendications 2 à 4, dans lequel la première couche (108) est une couche comprenant un métal par exemple du titane, la structure multicouche comprenant en outre une seconde couche (110) adjacente à la première couche comprenant un composite.

6. Procédé (200) selon la revendication précédente, dans lequel la seconde couche (110) présente une épaisseur supérieure à l'épaisseur de la première couche (108).

7. Procédé (200) selon la revendication 5 ou 6, dans lequel la première couche (108) et la seconde couche (110) sont collées.

8. Dispositif de focalisation d'ondes acoustiques pour la mise en œuvre du procédé (200) selon l'une des revendications 1 à 7, ledit dispositif comprenant :

- un laser pour émettre un faisceau laser,
- un premier module (1006) configuré pour recevoir la distance entre l'interface où le faisceau laser est focalisé et la surface extérieure de la structure, des vitesses de propagation des ondes longitudinale et transversale dans la structure,
- un second module (1008) configuré pour retourner un rayon du faisceau laser,
- un espace (1002) de stockage configuré pour enregistrer et stocker toute donnée lue par le premier module (1006), traitée par une unité de traitement (1004) et/ou envoyée par le second module (1008), **caractérisé en ce qu'**il comprend en outre :

- l'unité de traitement (1004) pour déterminer le rayon de la tâche du faisceau laser en fonction de la ou des vitesses de propagation et de ladite distance de sorte que le temps de parcours de l'onde longitudinale pour atteindre ladite interface et se superposer à l'onde transversale est égal à trois fois le temps de parcours de l'onde transversale pour atteindre ladite interface et se superposer à l'onde longitudinale.

**Patentansprüche**

1. Verfahren (200) zum Fokussieren von Schallwellen an einer Grenzfläche (106) zwischen zwei Lagen (108, 110) einer mehrlagigen Struktur (104), wobei das Verfahren umfasst:

- Bereitstellen (202) von Lasermitteln, die in der Lage sind, einen Laserstrahl (102) in Richtung einer Außenfläche (112) der mehrlagigen Struktur zu emittieren, um eine Longitudinalwelle (114) vom Zentrum eines auf die Außenfläche (112) projizierten Laserstrahlflecks und eine Transversalwelle (116) vom Rand des Flecks zu erzeugen,
- Bestimmen (204) der Entfernung der Grenzfläche (106) von der Außenfläche (112),
- Bestimmen (206) einer oder mehrerer Ausbreitungsgeschwindigkeiten ($V_L$) der Longitudinalwelle und einer oder mehrerer Ausbreitungsgeschwindigkeiten ($V_T$) der Transversalwelle der Lage bzw. Lagen, die von den Wellen durchlaufen wird bzw. werden, um die Grenzfläche zu erreichen,

**dadurch gekennzeichnet, dass** es den folgenden Schritt umfasst:

- Bestimmen (208) eines Radius (r) des Laserstrahlflecks in Abhängigkeit von der oder den Ausbreitungsgeschwindigkeiten und der genannten Entfernung, so dass die Laufzeit der Longitudinalwelle, um die genannte Grenzfläche zu erreichen und sich mit der Transversalwelle zu überlagern, gleich der dreifachen Laufzeit der Transversalwelle ist, um die genannte Grenzfläche zu erreichen und sich mit der Longitudinalwelle zu überlagern.

2. Verfahren (200) nach Anspruch 1,
wobei die Entfernung der Dicke (e) einer ersten Lage (108) der mehrlagigen Struktur entspricht, die die erste Außenfläche (112) trägt.

3. Verfahren (200) nach Anspruch 2,

wobei der Radius des Laserstrahlflecks durch die folgende Formel bestimmt wird:

$$r = e \sqrt{\frac{9V_T^2 - V_L^2}{V_L^2}}$$

worin r der Radius des Laserstrahlflecks ist, e die Dicke der ersten Lage ist, $V_L$ die Ausbreitungsgeschwindigkeit der Longitudinalwelle der ersten Lage ist und $V_T$ die Ausbreitungsgeschwindigkeit der Transversalwelle der ersten Lage ist.

4. Verfahren (200) nach einem der Ansprüche 1 bis 3,
wobei der Laserstrahl (102) eine Intensität mit einem im Wesentlichen quadratischen Profil aufweist.

5. Verfahren (200) nach einem der Ansprüche 2 bis 4,
wobei die erste Lage (108) eine Lage ist, die ein Metall, beispielsweise Titan, enthält, wobei die mehrlagige Struktur ferner eine zweite Lage (110) umfasst, die an die erste Lage angrenzt und einen Verbundwerkstoff enthält.

6. Verfahren (200) nach dem vorhergehenden Anspruch,
wobei die zweite Lage (110) eine Dicke aufweist, die größer ist als die Dicke der ersten Lage (108).

7. Verfahren (200) nach Anspruch 5 oder 6,
wobei die erste Lage (108) und die zweite Lage (110) miteinander verklebt sind.

8. Vorrichtung zum Fokussieren von Schallwellen zur Durchführung des Verfahrens (200) nach einem der Ansprüche 1 bis 7,

wobei die Vorrichtung umfasst:

- einen Laser zum Emittieren eines Laserstrahls,
- ein erstes Modul (1006), das dazu ausgelegt ist, die Entfernung zwischen der Grenzfläche, an der der Laserstrahl fokussiert wird, und der Außenfläche der Struktur sowie die Ausbreitungsgeschwindigkeiten der Longitudinal- und der Transversalwelle in der Struktur zu erfassen,
- ein zweites Modul (1008), das dazu ausgelegt ist, einen Radius des Laserstrahls auszugeben,
- einen Speicherbereich (1002), der dazu ausgelegt ist, alle vom ersten Modul (1006) eingelesenen, von einer Verarbeitungseinheit (1004) verarbeiteten und/oder vom zweiten Modul (1008) gesendeten Daten aufzuzeichnen und abzuspeichern,

**dadurch gekennzeichnet, dass** sie ferner umfasst:

- die Verarbeitungseinheit (1004) zum Bestimmen des Radius des Laserstrahlflecks in Abhängigkeit von der oder den Ausbreitungsgeschwindigkeiten und der genannten Entfernung, so dass die Laufzeit der Longitudinalwelle, um die genannte Grenzfläche zu erreichen und sich mit der Transversalwelle zu überlagern, gleich der dreifachen Laufzeit der Transversalwelle ist, um die genannte Grenzfläche zu erreichen und sich mit der Longitudinalwelle zu überlagern.

**Claims**

1. A method (200) of focusing acoustic waves at an interface (106) between two layers (108, 110) of a multilayer structure (104), the method comprising:

   - providing (202) laser means capable of emitting a laser beam (102) in the direction of an external surface (112) of the multilayer structure to produce a longitudinal wave (114) from the center of a spot of the laser beam projected on the external surface (112) and a transverse wave (116) from the periphery of said spot,
   - determining (204) the distance between said interface (106) and the external surface (112),
   - determining (206) one or more propagation velocit(y/ies) ($V_L$) of the longitudinal wave and one or more propagation velocit(y/ies) ($V_T$) of the transverse wave from the layer(s) crossed by said waves to reach said interface, **characterized in that** it comprises a step comprising:

   - determining (208) a radius (r) of the spot of the laser beam as a function of the propagation velocit (y/ies) and said distance so that the travel time of the longitudinal wave to reach said interface and to be superimposed with the transverse wave is equal to three times the travel time of the transverse wave to reach said interface and to be superimposed with the longitudinal wave.

2. The method (200) according to claim 1, wherein the distance corresponds to the thickness (e) of a first layer (108) of the multilayer structure carrying the first external surface (112).

3. The method (200) according to claim 2, wherein the radius of the spot of the laser beam is determined by the following formula:

$$r = e \sqrt{\frac{9V_T^2 - V_L^2}{V_L^2}}$$

With r being the radius of the spot of the laser beam, e being the thickness of the first layer, $V_L$ being the propagation velocity of the longitudinal wave of the first layer, and $V_T$ being the propagation velocity of the transverse wave of the first layer.

4. The method (200) according to one of claims 1 to 3, wherein the laser beam (102) has an intensity having a substantially square profile.

5. The method (200) according to one of claims 2 to 4, wherein the first layer (108) is a layer comprising a metal, for example titanium, the multilayer structure further comprising a second layer (110) adjacent to the first layer comprising a composite.

6. The method (200) according to the preceding claim, wherein the second layer (110) has a thickness larger than the thickness of the first layer (108).

7. The method (200) according to claim 5 or 6, wherein the first layer (108) and the second layer (110) are bonded.

8. A device for focusing acoustic waves including means configured for the implementation of the method (200) according to one of claims 1 to 7, said device comprising:

- a laser to emit a laser beam,
- a first module (1006) configured to receive the distance between the interface where the laser beam will be focused and the external surface of the structure, the propagation speeds of the longitudinal and transverse waves in the structure,
- a second module (1008) configured to return back a ray of the laser beam,
- a storage space (1002) configured to record and store any data read by the first module (1006), processed by a processing unit (1004) and/or sent by the module (1008), **characterized in that** it further comprises:

- the processing unit (1004) to determine a radius of the spot of the laser beam as a function of the propagation velocit(y/ies) and said distance so that the travel time of the longitudinal wave to reach said interface and to be superimposed with the transverse wave is equal to three times the travel time of the transverse wave to reach said interface and to be superimposed with the longitudinal wave.

FIG. 1

FIG. 2

**FIG. 3**

**FIG. 4**

200

Fournir des moyens laser pour émettre
un faisceau laser — 202

Fournir une distance à atteindre par le faisceau
laser dans une structure multicouche — 204

Fournir des vitesses de propagation d'ondes
dans la structure multicouche — 206

Déterminer le rayon du faisceau laser — 208

# FIG. 5

1000

1006        1004        1008

PROC

IN

OUT

MEM

1002

FIG. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016109343 A1
- US 2016131557 A1
- US 7509876 B1

**Littérature non-brevet citée dans la description**

- Laser shock adhesion test numerical optimization for composite bonding assessment. **ECAULT ROMAIN et al.** COMPOSITE STRUCTURES. ELSEVIER SCIENCE LTD, 04 May 2020, vol. 247
- State-of-the-art laser adhesion test (LASAT). **L. BERTHE et al.** Nondestructive testing and evaluation. 01 September 2011, vol. 26, 303-317
- Physical approach to adhesion testing using laser-driven shock waves. **BOLIS C. et al.** JOURNAL OF PHYSICS D: APPLIED PHYSICS. INSTITUTE OF PHYSICS PUBLISHING, 21 May 2007, vol. 40, 3155-3163